# EUROPEAN PATENT APPLICATION

(11) **EP 3 578 761 A1**
(43) Date of publication of application: **11.12.2019**
(21) Application number: 19173438.3
(22) Date of filing: 09.05.2019
(51) Int. Cl.: F01D 9/04, F01D 17/16, F01D 25/24, F04D 29/56

(54) **GAS TURBINE ENGINE COMPRESSOR WITH A VARIABLE STATOR VANE ARRANGEMENT**

(30) Priority: 08.06.2018 GB 201809439
(71) Applicant: Rolls-Royce plc, London SW1E 6AT (GB)
(72) Inventor: Neelambaran, Karapurath, Derby, Derbyshire DE24 8BJ (GB); Kyle, Robert, Derby, Derbyshire DE24 8BJ (GB)
(74) Representative: Rolls-Royce plc

(57) **Abstract**

A variable stator vane arrangement is provided in which the variable stator vanes extend from a first end at a radially inner flow boundary to a second end at a radially outer flow boundary. At least one of the radially inner flow boundary and the radially outer flow boundary is faceted, such that the surface of the faceted flow boundary comprises flat portions at the interfaces with the respective first or second end of each stator vane. The flat portions mean that the tips of the variable stator vanes can be made substantially flush with the flat casing portions. This may improve aerodynamic efficiency and/or increase the design flexibility on where to position the pivot axis of the variable stator vanes.

## Description

### Field of the disclosure

This disclosure relates to a variable stator vane such as a variable inlet guide vane.

### Background

In a gas turbine engine having a multi-stage axial compressor, air is continuously induced into the compressor, accelerated by the rotating compressor blades and swept rearwards onto an adjacent row of stator vanes. Each rotor-stator stage increases the pressure of the air passing through the stage and at the final stage of a multistage compressor the air pressure may be many times that of the inlet air pressure.

In addition to converting the kinetic energy of the air into pressure the stator vanes also serve to correct the deflection given to the air by the rotor blades and to present the air at the correct angle to the next stage of rotor blades.

As compressor pressure ratios have increased it has become more difficult to ensure that the compressor will operate efficiently over the operational speed range of the engine. This is because the inlet to exit area ratios of the stator vanes required for high pressure operation can result in aerodynamic inefficiency and flow separation at low operational speeds and pressures.

In applications where high pressure ratios are required the above problem may be overcome by using variable stator vanes.

The use of variable stator vanes permits the angle of one or more rows of stator vanes in a compressor to be adjusted, while the engine is running, for example in accordance with the rotational speed and mass flow of the compressor. Variable stator vanes thus permit the angle of incidence of the exiting air onto the rotor blades to be corrected to angles which the rotor blades can tolerate without flow separation. At low speed and mass flow conditions, the variable vanes may be considered to be in a "closed" position, directing and turning the airflow in the direction of rotation of the rotor blades immediately downstream. This reduces the angle of incidence at entry to the blades and hence the tendency of them to stall. As the rotational speed and mass flow of the compressor increases with increasing engine power, the vanes are moved progressively and in unison towards what may be considered to be an "open" position.

The movement is controlled such that the flow angle of the air leaving the stator vanes continues to provide an acceptable angle of incidence at entry to the downstream row of rotor blades. When the vanes are in the fully "open" position, the angles of all of the stator vanes and rotor blades will typically match the aerodynamic condition at which the compressor has been designed i.e. its "design point".

Variable stator vanes may therefore help to ensure sufficient surge margin while maintaining efficient operation of the compressor over a wide range of rotational speeds and operating conditions. A function of such variable stator vanes may be to improve the aerodynamic stability of the compressor when it is operating at relatively low rotational speeds at off-design, i.e. non-optimum speed, conditions.

Such variable stator vanes may be located anywhere in the compressor of a modern gas turbine engine, for example in an intermediate pressure compressor and/or in a high pressure compressor. In an axial flow gas turbine engine, the high pressure compressor is typically downstream of the intermediate pressure compressor and may rotate at a higher speed than the intermediate pressure compressor.

The term variable inlet guide vane (VIGV) used herein refers specifically to vanes in the row of variable vanes at the entry to a compressor. The term variable stator vane (VSV) used herein refers generally to the vanes in the one or more rows of variable vanes in the compressor which may include a VIGV row.

In use, the VSVs are able to pivot about a pivot axis in order to adjust their angle of attack to the oncoming flow. Typically, the VSV has an aerofoil portion that is attached to a base portion (the base portion may be referred to as a "penny" in some literature in the field). The base portion is used to mount the VSV into a surrounding casing and pivots with the VSV. In order to improve the aerodynamic efficiency of the VSV in conventional arrangements, it is typically necessary for the base portion to cover (i.e. to extend forward of) the leading edge of the aerofoil portion, with a fillet being formed between the leading edge of the aerofoil portion and the base portion.

However, because the base portion is an integral part of the VSV and thus pivots with the VSV, it is required to have a circular shape when viewed along the pivot axis, with the pivot axis passing through the centre of the circle. The diameter of the circle of the base portion is limited by the circumferential spacing of the VSVs. Accordingly, the requirement for the base portion to extend beyond the leading edge of the aerofoil portion of conventional VSVs whilst not exceeding the diameter limitation imposed by the circumferential spacing of the VSVs imposes a constraint on the maximum permitted distance between the leading edge of the aerofoil portion and the pivot axis.

In practice, this means that the pivot axis is often required to be closer to the leading edge of the aerofoil portion than would be the case in the absence of the constraint explained above. In turn, this results in the VSV experiencing increased loads, both during normal operation and during surge, because the pivot axis is further away from the centre of pressure of the VSV (i.e. the point on the vane through which the net aerodynamic force acts) than would otherwise be the case. This requires the other components of the VSV system (such as the actuator(s), lever(s) and load bearing components) to be larger and heavier, both in order to apply the operation loads and to survive the increased loads generated in the event of a compressor surge.

Furthermore, the requirement for the base portion to extend beyond the leading edge of the aerofoil portion dictates a minimum size - and thus a minimum weight - of base portion for a given location of the pivot axis.

Also in a conventional arrangement, it is necessary to provide a cutback, or cutaway, to the parts of the tips of the aerofoil portion that are not connected to the base portion (which are typically at the trailing edge of the aerofoil portion). This is to enable the VSV to pivot about its pivot axis (which is in a substantially radial direction of the gas turbine engine) without interfering with the surrounding annular (or frusto-conical) casing. Such cutbacks have a detrimental impact on the aerodynamic efficiency of the VSVs.

Accordingly, it would is desirable to provide a VSV with lower weight and/or improved efficiency.

### Summary of the disclosure

The present disclosure provides a compressor and a gas turbine engine as set out in the appended claims.

According to an aspect there is provided a compressor for a gas turbine engine comprising:
a radially inner flow boundary;
a radially outer flow boundary; and
an annular array of variable stator vanes, each stator vane extending from a first end at the radially inner flow boundary to a second end at the radially outer flow boundary.

At least one of the radially inner flow boundary and the radially outer flow boundary is faceted, such that the surface of the faceted flow boundary comprises flat portions at the interfaces with the respective first or second end of each stator vane.

The radially inner flow boundary and/or radially outer flow boundary (regardless of whether or not it is a faceted flow boundary) may be said to the generally annular or generally frusto-conical.

Arrangements in accordance with the present disclosure may enable the variable stator vanes to be pivotable in use without the need to provide cutbacks at the tips of the blades in order to avoid interference with the flow boundaries in use.

Arrangements in accordance with the present disclosure may allow negate the requirement to have a base portion that extends forwards of the leading edge of the VSV, for example because the leading edge of the VSV can be flush with the faceted flow boundary, for example throughout its pivot range.

Accordingly, arrangements in accordance with the present disclosure may increase the design freedom in the position of the pivot (or spindle) axis.

For at least these reasons (which are non-limitative examples of advantages of the present disclosure), arrangements described and/or claimed herein may result in a VSV arrangement that is lighter and/or more compact and/or more efficient than previous VSV arrangements.

It will be appreciated that the compressor may comprise a VSV mechanism to adjust the angle of the VSVs in use by pivoting them about a pivot axis. Such a VSV mechanism may comprise an actuator (such as a linear actuator). Such an actuator may be arranged to drive a unison ring, for example in a circumferential direction around the radially outer flow boundary. Each VSV may be connected to such a unison ring via a lever, so as to convert circumferential movement of the unison ring into pivoting of the connected VSV.

Accordingly, each stator vane may be pivotable about a pivot axis. The flat portions of the faceted flow boundary may be perpendicular to the pivot axis of the respective stator vane at each interface. Pivoting the stator vane about the pivot axis (which may be in a substantially radial direction of the engine) may be said to change the angle of incidence of the VSVs.

Each stator vane may comprise an aerofoil portion. Each stator vane may comprise a boundary interface portion. The boundary interface portion may be a flat surface. The boundary interface portion may lie in the same plane as the respective flat portion of the faceted flow boundary. The boundary interface portion may be adjacent a flat portion of the faceted flow boundary. The boundary interface portion may be encircled by a flat portion of the faceted flow boundary.

Such a boundary interface portion may be circular, for example when viewed along the pivot axis and/or perpendicular to the plane of the respective flat portion.

There may be substantially no gap between the boundary interface portion and the surrounding flat portion of the faceted flow boundary. The boundary interface portion may be regarded as a continuation of a flat portion of the faceted flow boundary, for example with just sufficient clearance to pivot relative to the respective flat portion.

The boundary interface portion (where present) may extend axially between a position that is downstream of the leading edge of the aerofoil portion and a position that is upstream of the trailing edge of the aerofoil portion. Thus, for example, in some arrangements the boundary interface portion may not extend beyond the leading edge of the aerofoil portion, for example the leading edge of the aerofoil portion at the end adjacent the faceted flow boundary.

In some arrangements, the boundary interface portion (where present) may extend upstream of the leading edge of the aerofoil portion (at the end adjacent the faceted boundary) by a distance that is less than 5%, for example less than 2%, of the chord length of the aerofoil portion. The chord length may be taken as the average chord length between 10% and 90% of the vane span.

Some arrangements may not comprise a boundary interface portion, for example at the end of the VSV at a faceted flow boundary. In such arrangements, the tips, or ends, of the VSV (that is, the tips of an aerofoil portion of the VSV) may be directly adjacent the faceted surface, for example over the entire end surface of the VSV.

There may be substantially no gap between each vane (i.e. between the aerodynamic surfaces, or aerofoil portion, or each vane) and the faceted flow boundary in the direction of a pivot axis of each vane. For example, there may be no such gap over the entire end surface of the VSV.

As used herein, the "end surface" of a VSV may mean a surface that connects a pressure surface and a suction surface of the VSV at its tip. The end surface may be substantially perpendicular to the pivot axis. The end surface may be substantially parallel to the adjacent flat portion of the faceted flow boundary.

Each stator vane experiences an aerodynamic loading in use, with the resultant force produced by the aerodynamic loading being represented by a net aerodynamic vector, and each stator vane may be said to be pivotable about a pivot axis. For each stator vane, the pivot axis may be closer to the net aerodynamic vector than it is to a leading edge of the aerofoil. Additionally or alternatively, the distance between the pivot axis and the net aerodynamic vector may be less than 20% (for example less than 10%, less than 5%, or less than 2%) of the chord length of the stator vane, where the chord length is taken as the average chord length between 10% and 90% of the vane span. In some arrangements, the net aerodynamic vector may substantially intersect the pivot axis.

The distance between the pivot axis and the net aerodynamic vector may be the perpendicular, or closest, distance between the pivot axis and the net aerodynamic vector. The distance between the pivot axis and the net aerodynamic vector may be the shortest perpendicular distance between the vector representing the net aerodynamic force on the VSV (which may be referred to as the vector that passes through the centre of pressure of the VSV) and the pivot axis. The centre of pressure and/or the vector representing the net aerodynamic force VSV may be determined at cruise conditions of the engine, i.e. with the VSV at the nominal design angle. The distance between the pivot axis and the leading edge of the VSV may be the average of the shortest distance between the leading edge and the pivot axis between 10% and 90% of vane span.

Either one or both of the radially inner flow boundary and the radially outer flow boundary may be faceted. The radially inner flow boundary may be at least a part of a radially inner casing. The radially outer flow boundary may be at least a part of a radially outer casing.

The compressor may comprise one or more than one, for example two, three, four, five or more than five annular arrays of VSVs with at least one of the radially inner flow boundary and the radially outer flow boundary being faceted.

The inner flow boundary may extend axially upstream and/or axially downstream of the annular array of VSVs. The inner flow boundary may extend axially upstream and/or axially downstream of the annular array of VSVs. An upstream portion of the faceted flow boundary (which may be the inner flow boundary and/or the outer flow boundary) and/or a downstream portion of the faceted flow boundary may not be faceted. Such a flow boundary that comprises a faceted portion axially separated from a non-faceted portion may comprise a transition region between the faceted portion and the non-faceted portion.

According to an aspect, there is provided a casing for a compressor of a gas turbine engine as described and/or claimed herein. The casing comprises a faceted surface comprising flat portions, each flat portion being arranged to form an interface with a variable stator vane.

According to an aspect, there is provided a method of manufacturing a casing for a variable stator vane row of a gas turbine engine. The method comprises providing a substantially annular casing, and machining flat portions into the substantially annular casing so as to form flat portions, each flat portion being arranged to form an interface with a variable stator vane.

According to an aspect, there is provided a method of manufacturing a casing for a variable stator vane row of a gas turbine engine. The method comprises providing a substantially annular casing. The method comprises attaching a panel to the annular casing, the panel comprising at least one flat portion, each flat portion being arranged to form an interface with a variable stator vane. One or more panels may be provided to form a faceted surface around the annular casing, the faceted surface being a faceted flow boundary. In any aspect, the faceted flow boundary may be said to be formed by a ring of circumferentially adjacent flat portions.

Such a panel or panels may be attached to the annular casing in any suitable manner, for example using an adhesive and/or one or more mechanical fasteners.

According to any aspect, the flat portions of the faceted flow boundary (and/or casing) form at least a part of an inner flow boundary or an outer flow boundary of a compressor when assembled in a gas turbine engine. The flat portions may form part of the gas-washed surface of a gas turbine engine, for example a gas washed surface of the core flow of a gas turbine engine.

According to an aspect, there is provided a method of manufacturing a gas turbine engine comprising:
manufacturing a casing according to any of the methods described and/or claimed herein;
installing a plurality of variable stator vanes with the casing to form an annular array of variable stator vanes; and
connecting the variable stator vanes to a drive mechanism arranged to pivot the variable vanes about respective pivot axes in order to adjust the angle of the vanes about a substantially radial direction of the engine.

The drive mechanism may comprise, for example, an actuator (which may be a linear actuator), a unison ring centred on the engine axis and arranged to be driven by the actuator in a circumferential direction around the engine axis, and a plurality of levers, each lever being connected to the unison ring and to a VSV so as to convert circumferential movement of the unison ring into pivoting of the VSV about its pivot axis.

According to an aspect, there is provided a gas turbine engine comprising one or more compressors as described and/or claimed herein.

The gas turbine engine may be for an aircraft. The gas turbine engine may comprise an engine core comprising a turbine, the compressor as described and/or claimed herein, and a core shaft connecting the turbine to the compressor. The gas turbine engine may comprise a fan located upstream of the engine core, the fan comprising a plurality of fan blades. The gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

In such a gas turbine engine, the turbine may be a first turbine, the compressor may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft. In such an arrangement, the second compressor may also comprise one or more annular arrays of VSVs with an associated faceted flow boundary as described and/or claimed herein. The second compressor may be positioned axially downstream of the first compressor. The second compressor may be arranged to receive (for example directly receive, for example via a generally annular duct) flow from the first compressor.

In arrangements in which the gas turbine engine comprises a gearbox to drive the fan, the gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be VSVs as described and/or claimed herein. The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range of from 0.28 to 0.31 or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of from 13 to 16, or 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C. Purely by way of further example, the cruise conditions may correspond to: a forward Mach number of 0.85; a pressure of 24000 Pa; and a temperature of -54 degrees C (which may be standard atmospheric conditions at 35000 ft).

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a schematic showing a variable vane arrangement in accordance with aspects of the present disclosure;
**Figure 5** is a schematic view showing variable stator vanes and a faceted flow boundary in accordance with aspects of the present disclosure;
**Figure 6** is a side view of a variable stator vane in accordance with aspects of the present disclosure; and
**Figure 7** is a side view of another variable stator vane in accordance with aspects of the present disclosure.

### Detailed description of the disclosure

Aspects and embodiments of the present disclosure will now be discussed with reference to the accompanying figures. Further aspects and embodiments will be apparent to those skilled in the art.

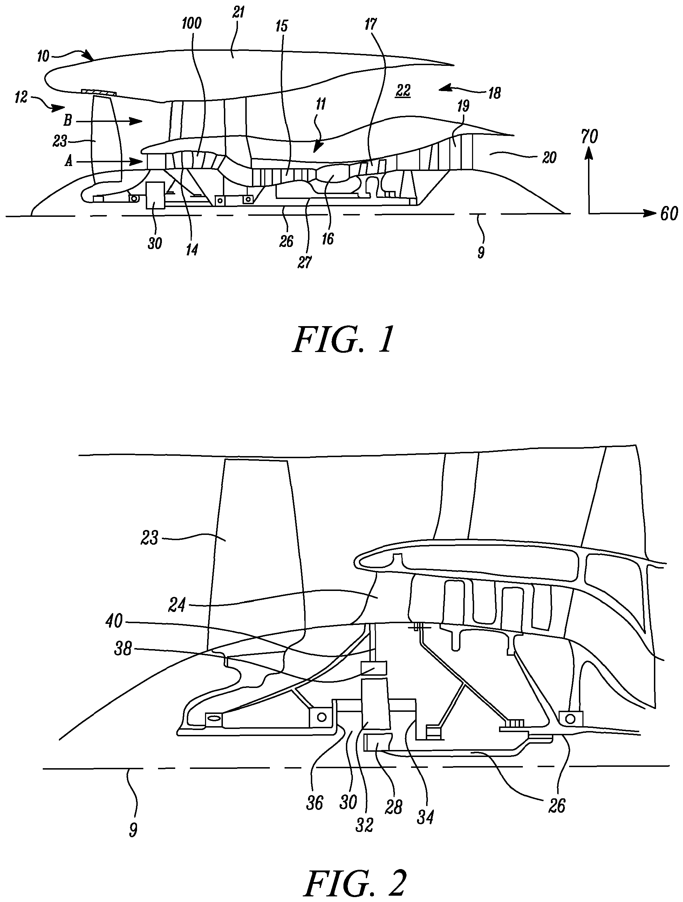

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

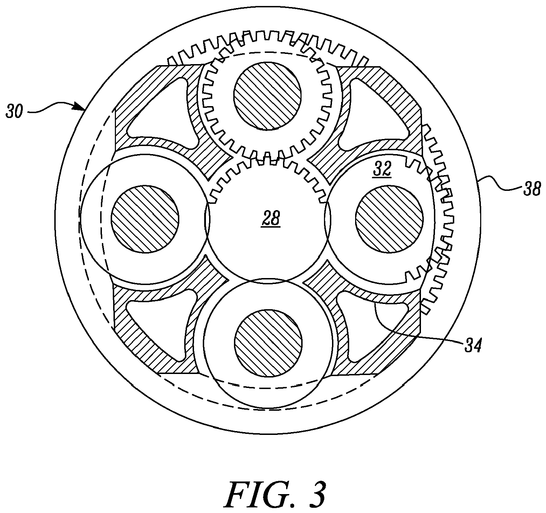

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

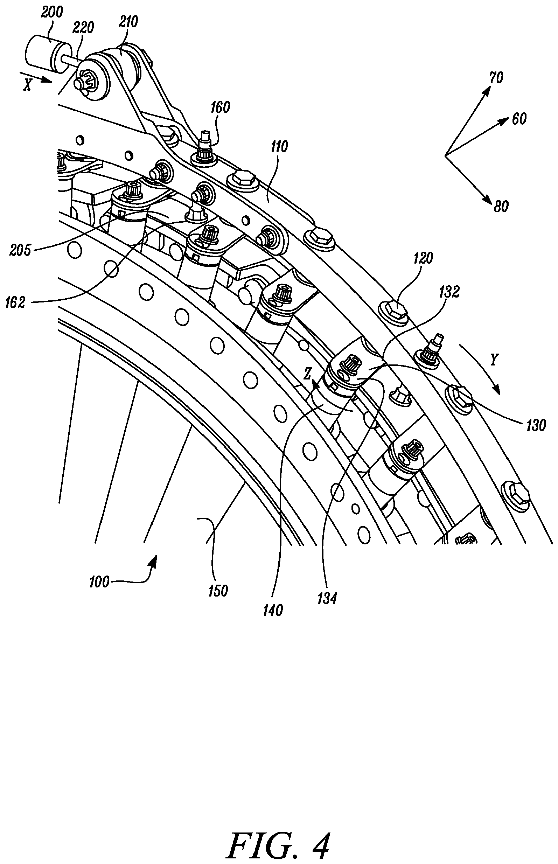

The geometry of the gas turbine engine 10, and components thereof, is defined by a conventional axis system, comprising an axial direction 60 (which is aligned with the rotational axis 9), a radial direction 70 (in the bottom-to-top direction in Figure 1), and a circumferential direction (perpendicular to the page in the Figure 1 view, labelled 80 in Figure 4). The axial, radial and circumferential directions are mutually perpendicular.

The gas turbine engine 10 comprises at least one annular array (or row) 100 of variable stator vanes (VSVs). It will be understood that the position of the VSV rows 100 shown in Figures 1 and 2 are by way of example only, and that VSV rows may be provided in any suitable location, for example at entry to the compressor (as a variable inlet guide vane, or VIGV) and/or anywhere in the low pressure compressor 14 and/or anywhere in the high pressure compressor 15.

Such a VSV row 100 comprises a variable vane mechanism that allows the angle of the vanes (for example the angle of incidence of the vanes) to be adjusted in use.

**Figure 4** shows a part of the VSV (or VIGV) row 100 in greater detail, including a variable vane mechanism. The VSV 100 comprises variable stator vanes 150. The angle of the variable stator vanes 150 may be adjusted during use. In order to vary the angle of the stator vanes 150, an actuator 200 may be used, which may be a linear actuator as in the Figure 2 example. The actuator 200 is connected to a unison ring 110 (which may be referred to as a drive ring 110) via a drive bar 220 that connects to the unison ring 110 via a joint (which may be a hinge) 210. The joint 210 may allow rotation of the unison ring 110 relative to the actuator 200, for example about an axial direction running through the joint. This may be particularly suitable for arrangement having a linear actuator.

Movement of the actuator 200 (which may be, for example, based on a control signal which may in turn be based on an engine operating condition and/or thrust demand) causes the unison ring 110 to rotate about the axial direction 60. In the Figure 4 example, linear movement X of the actuator 200 is converted into circumferential movement Y of the unison ring 110.

The unison ring 110 has at least one drive pin 120 connected thereto. The drive pin 120 is rigidly connected to the unison ring 110 such that the unison ring 110 and the drive pin 120 move together. The drive pin 120 is connected to a first end 132 of a lever 130. The first end 132 of the lever 130 therefore moves with the drive pin 120, but may rotate relative to it about a longitudinal axis of the drive pin 120.

A second end 134 of the lever 130 may be separated from the first end 132 in a direction that has at least a component (for example a major component) in the axial direction 30. The second end 134 may be spaced from the first end 132 in a substantially axial direction 30. The second end 134 of the lever 130 is connected (for example rigidly connected) to a vane 150. The second end 134 may, for example, be connected to a spindle 140 that extends from a vane 150, as in the Figure 4 example. The second end 134 of the lever 130 may be rigidly fixed in the axial 60, radial 70 and circumferential 80 directions, but may be rotatable about a radial direction 70, as indicated by the arrow Z in Figure 4.

Accordingly, the circumferential movement Y of the unison ring 110 (which may be described as rotation about the axial direction 60) may be converted into rotation Z of the vane 150 about a substantially radial direction 70. This may be achieved by the drive pin 120 and the lever 130.

In order to ensure that the VSV arrangement 100 is reliable (for example accurate and/or repeatable) the unison ring 110 must be kept concentric with the rest of the arrangement. In order to achieve this, one or more centralising pins 160 is provided. Each centralising pin 160 is in slidable contact with a guide surface, which may be part of a casing 205 within which the variable vanes 150 are housed. In use, the guide surface remains stationary, and the first end 162 of the centralising pin 160 slides across, and remains in contact with the guide surface. Accordingly, the position (for example at least the radial position) of the unison ring 110 relative to the casing 205 may be determined and/or maintained by the centralising pin 160. The casing 205 may be said to be rigidly attached to and/or an integral part of the gas turbine engine 10. Other arrangements may have alternative mechanisms for keeping the unison ring 110 concentric with the rest of the arrangement.

The VSV arrangement described above in relation to Figure 4 is by way of example only, and it will be appreciated that any suitable VSV mechanism may be compatible with the present disclosure.

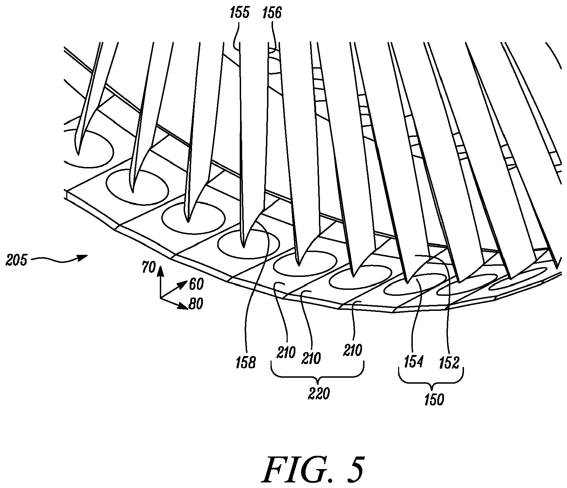

**Figure 5** shows VSVs 150 of the VSV row 100 installed in the casing 205 in greater detail. The casing 205 forms a flow boundary, which is a radially outer flow boundary in Figure 5. In the region (i.e. over the axial extent) of the VSV row 100, the radially outer flow boundary comprises a plurality of flat portions 210, which together form a faceted flow boundary 220. Each flat portion 210 has a corresponding VSV 150. Thus, the number of flat portions 210 on the faceted flow boundary 220 is the same as the number of VSVs 150.

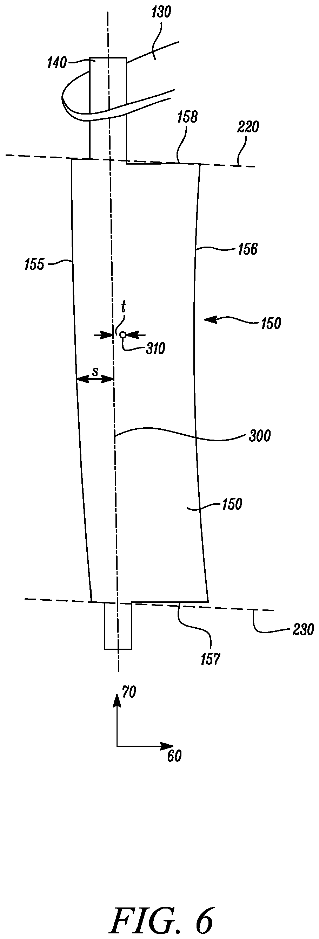

**Figure 6** is a schematic side view of a VSV 150 and will be described in greater detail below. Referring both to Figure 5 and Figure 6, each VSV 150 extends from a first end 157 located at (for example adjacent) a radially inner flow boundary 230 to a second end 158 located at (for example adjacent) the radially outer flow boundary 220. Each VSV 150 has a leading edge 155 and a trailing edge 156.

As described above in relation to Figure 4 and shown again in Figure 6, in use, each variable vane is pivotable about a pivot axis (which may be referred to as a spindle axis) 300. In the Figure 6 example, the lever 130 is attached to the spindle 140 so as to transfer circumferential movement of the unison ring 110 to pivoting (or rotational) movement of the VSV 150 about its pivot axis 300. The pivot axis 300 may be substantially aligned with the radial direction 70, as shown in the Figure 6 example, although the pivot axis 300 may contain a minor component in the axial direction 60 and/or the local circumferential direction 80.

In the Figure 5 and Figure 6 examples, each flat portion 210 of the faceted flow boundary 220 is substantially perpendicular to the local radial direction 70. Accordingly, as the VSV 150 pivots about its pivot axis 300, a gap between the faceted flow boundary 220/230 and the respective first end 157 or second end 158 of the VSV 150 (i.e. the gap at the interface between the VSV and the flow boundary 220, 230) remains substantially constant along the entire surface (or tip surface) of the respective first end 157 or second end 158. This enables the gap between the faceted casing 220/230 and the respective first end 157 or second end 158 of the VSV 150 to be minimized and/or substantially eliminated. For example, the faceted casing 220/230 and the respective first end 157 or second end 158 may be substantially parallel, with only a small clearance gap provided to enable relative movement as the VSV 150 pivots about its pivot axis 300.

This means that the aerodynamic efficiency of the VSV 150 according to the present disclosure is improved relative to conventional arrangements having non-faceted flow boundaries. In such conventional arrangements, the trailing edges of the VSVs must be cutback, or chamfered sufficiently to ensure that they do not clash with the flow boundary at the extremes of rotation about their pivot axis. Accordingly, the VSVs according to the present disclosure may have reduced tip losses compared with those of conventional arrangements.

The VSV 150 shown in Figure 6 comprises an aerofoil portion 152 and a boundary interface portion 154 (which may be referred to as a "penny" 154). The boundary interface portion 154 is substantially flush with the corresponding flat portion 210 of the faceted flow boundary 220. The boundary interface portion 154 is circular when viewed along the pivot axis and/or viewed in a substantially radial direction. Accordingly, the boundary interface portion may be said to be provided in a circular recess in the flat portion 210 of the faceted flow boundary 210.

In the Figure 5 arrangement, the boundary interface portion 154 extends upstream at least as far as the leading edge 155 of the VSV 150. However, this need not be the case for all arrangements. For example, because the end surface 157/158 of the VSV 150 can be substantially flush with the adjacent flat surface 210, the losses created at the interface between the VSV 150 and the flat surface 210 can be significantly reduced, and thus there is no longer such a need, or advantage, to extending the boundary interface portion 154 upstream of the tip 155 of the aerofoil portion 152.

In this regard, the Figure 6 example does not comprise a boundary interface portion. Instead, the tip surface at the first end 157 of the VSV 150 is parallel to the adjacent flat surface 210 of the inner flow boundary 230, and the tip surface at the second end 158 of the VSV 150 is parallel to the adjacent flat surface 210 of the outer flow boundary 220 (both the inner flow boundary 230 and the outer flow boundary are faceted in the Figure 6 example), and the gaps between the tip surfaces and the adjacent flat surfaces 210 are minimised to reduce (or substantially eliminate) tip leakage, and thus improve efficiency.

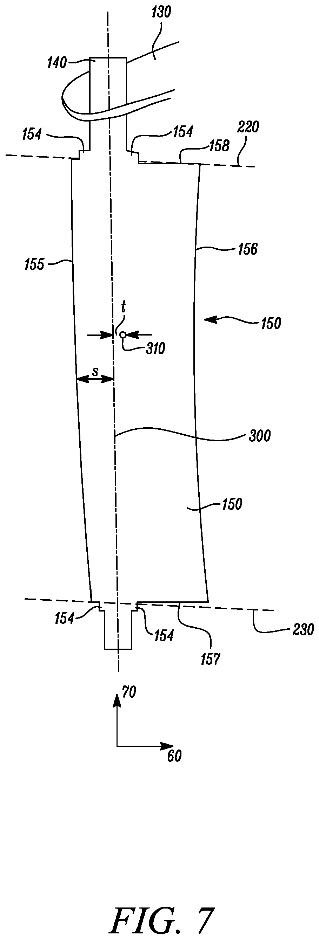

The **Figure 7** example is substantially the same as the Figure 6 example, other than in that it comprises a boundary interface portion 154 at both the first end 157 and the second end 158. The boundary interface portions 154 of the Figure 7 arrangement do not extend upstream as far as the leading edge 155 of the VSV 150. Indeed, in the illustrated arrangement of Figure 7, the boundary interface portions 154 extend from a position downstream of the leading edge 155 to a position upstream of the trailing edge 156.

In general, because the boundary interface portion 154 no longer needs to "cover" the leading edge 155 of the VSV 150, it may be smaller (i.e. smaller diameter) than previous arrangements, or may not be required at all. In turn, this creates greater freedom over the choice of position of the pivot axis 300.

Figure 6 shows the distance t (which may be taken as the shortest distance) between the net aerodynamic vector 310 acting on the VSV in use (for example in a "neutral" position, which may be the cruise condition of the engine 10) and the pivot axis 300. This distance t is less than the distance s between the pivot axis 300 and the leading edge 155 of the VSV 150. Additionally or alternatively, the distance t may be less than 10% of the chord length of the VSV 150.

In general, the increased choice on the location of the pivot axis 300 (for example relative to the net aerodynamic vector 310 or the leading edge 155) allows the pivot axis to be positioned so as to reduce the forces acting on the VSV 150 - in normal use and/or in a surge condition - enabling the size and/or weight of various components of the VSV mechanism to be reduced.

The flat portions 210 of the faceted flow boundary may be produced in any desired manner. For example, the flat portions 210 may be machined into the flow boundary from an initial cylindrical or frusto-conical boundary. Alternatively, the flat portions may be provided as one or more packers or inserts that are attached to the casing 205.

It will be appreciated that one or both of the inner flow boundary 230 and the outer flow boundary 220 may be provided with flat portions 210, so as to produce a faceted flow boundary as described and/or claimed herein.

Except where mutually exclusive, any of the features may be employed separately or in combination with any other features and the disclosure extends to and includes all combinations and sub-combinations of one or more features described herein.

It will be understood that the invention is not limited to the embodiments above-described and various modifications and improvements can be made without departing from the concepts described herein within the scope of the appended claims.

## Claims

1. A compressor (14, 15) for a gas turbine engine (10) comprising:
a radially inner flow boundary (230);
a radially outer flow boundary (220);
an annular array (100) of variable stator vanes (150), each stator vane extending from a first end (157) at the radially inner flow boundary to a second end (158) at the radially outer flow boundary, wherein:
at least one of the radially inner flow boundary and the radially outer flow boundary is faceted, such that the surface of the faceted flow boundary comprises flat portions (210) at the interfaces with the respective first or second end of each stator vane.

2. The compressor according to claim 1, wherein:
each stator vane is pivotable about a pivot axis (300); and
the flat portions of the faceted flow boundary are perpendicular to the pivot axis of the respective stator vane at each interface.

3. The compressor according to claim 1 or 2, wherein each stator vane comprises:
an aerofoil portion (152); and
a boundary interface portion (154), wherein
the boundary interface portion is a flat surface lying in the same plane as the adjacent flat portion of the faceted flow boundary.

4. The compressor according to claim 3, wherein the boundary interface portion is circular.

5. The compressor according to claim 3 or 4, wherein there is substantially no gap between the boundary interface portion and the surrounding flat portion of the faceted flow boundary.

6. The compressor according to any one of claims 3 to 5, wherein the boundary interface portion extends axially between a position that is downstream of the leading edge of the aerofoil portion and a position that is upstream of the trailing edge of the aerofoil portion.

7. The compressor according to any one of claims 3 to 5, wherein the boundary interface portion extends upstream of the leading edge of the aerofoil portion by a distance that is less than 5% of the chord length of the aerofoil portion, the chord length being taken as the average chord length between 10% and 90% of the vane span.

8. The compressor according to any preceding claim, wherein there is substantially no gap between each vane and the faceted flow boundary in the direction of a pivot axis of each vane.

9. The compressor according to any preceding claim, wherein:
each stator vane experiences an aerodynamic loading in use, with the resultant force produced by the aerodynamic loading being represented by a net aerodynamic vector (310);
each stator vane is pivotable about a pivot axis; and
for each stator vane, the pivot axis is closer to the net aerodynamic vector than it is to a leading edge (155) of the aerofoil.

10. The compressor according to any preceding claim, wherein:
each stator vane experiences an aerodynamic loading in use, with the resultant force produced by the aerodynamic loading being represented by a net aerodynamic vector;
each stator vane is pivotable about a pivot axis; and
the distance (t) between the pivot axis and the net aerodynamic vector is less than 10% of the chord length of the stator vane, where the chord length is taken as the average chord length between 10% and 90% of the vane span.

11. The compressor according to any preceding claim, wherein both the radially inner flow boundary and the radially outer flow boundary are faceted.

12. The compressor according to any preceding claim, wherein a portion of the faceted flow boundary upstream and/or downstream of the annular array of stator vanes is not faceted.

13. A gas turbine engine comprising a compressor according to any preceding claim.
